# EUROPÄISCHE PATENTSCHRIFT

(11) **EP 0 915 272 B1**
(45) Veröffentlichungstag und Bekanntmachung des Hinweises auf die Patenterteilung: **03.12.2003**
(21) Anmeldenummer: 98119058.0
(22) Anmeldetag: 08.10.1998
(51) Int. Cl.: F16J 15/08

(54) **Metallische Zylinderkopfdichtung**
Metallic cylinder head gasket
Joint de culasse métallique

(30) Priorität: 06.11.1997 DE 19749053
(43) Veröffentlichungstag der Anmeldung: 12.05.1999
(73) Patentinhaber: Federal-Mogul Sealing Systems GmbH, 57562 Herdorf (DE)
(72) Erfinder: Heilig, Markus, Dipl.-Ing., 57518 Betzdorf (DE)

(56) Entgegenhaltungen:
- EP-A- 0 459 060
- EP-A- 0 465 268

## Beschreibung

Die Erfindung betrifft eine metallische Flachdichtung, insbesondere Zylinderkopfdichtung von Brennkraftmaschinen, bestehend aus mindestens einem dem Zylinderkopf zugeordneten ersten Deckblech mit einer ersten Vollsicke und mindestens einem dem Zylinderblock zugeordneten zweiten Deckblech mit einer zweiten Vollsicke, wobei die Vollsicken eine Brennraumoffnung umgeben und einer zwischen dem ersten und zweiten Deckblech angeordneten Distanzplatte, welche auf der der ersten oder der zweiten Vollsicke zugeordneten Flache Abstutzmittel aufweist, wobei die erste und zweite Vollsicke radial versetzt zueinander angeordnet sind, derart, daß die dem Abstützmittel gegenuberliegende Vollsicke mit ihrer Sickenspitze am Randbereich des Abstützmittels und mit einem der Brennraumoffnung benachbarten Sickenfuß innerhalb der radialen Erstreckung des Abstutzmittels angeordnet ist

Bei thermisch hochbeanspruchten Brennkraftmaschinen treten zwischen Zylinderkopf und Zylinderblock große Warmeausdehnungen auf Auch bei Motoren, bei denen der Zylinderblock und der Zylinderkopf aus gleichen Materialien, z B aus Aluminium, bestehen, treten im Zylinderkopf höhere Temperaturen als im Zylinderblock auf, was dazu führt, daß die Zylinderköpfe sich starker ausdehnen Werden unterschiedliche Materialien verwendet, so ist die Relativebewegung noch großer Bei einem Motorblock aus Gußeisen und einem Zylinderkopf aus Aluminium ist eine hohe Relativbewegung vorprogrammiert

Die Abdichtung des Fugenspaltes zwischen Zylinderblock und Zylinderkopf obiger Brennkraftmaschinen erfolgt über laminierte Stahldichtungen, die je nach Anforderung unterschiedlich konstruiert sind. Es sind Konstruktionen bekannt, bei denen zwischen zwei elastischen Deckblechen eine Distanzplatte angeordnet ist. Um die Brennraumoffnungen erstrecken sich Vollsicken, wobei die Vollsicken symmetrisch zur Distanzplatte angeordnet sind Die EP 0 306 766 A1 offenbart ein solches Dichtungskonzept Um die Vollsicken vor dynamischen und thermischen Belastungen zu schützen, sind um die Brennraumoffnungen Abstutzmittel für die Sicken vorgesehen

Bei Motoren mit einem sehr schmalen Teilungsbereich zwischen benachbarten Brennraumoffnungen hat sich obige Konstruktion nicht bewährt, da aufgrund der engen Platzverhaltnisse keine symmetrische Anordnung der Abstützmittel und Vollsicken moglich ist

Um dieses Problem zu beseitigen wurde bereits vorgeschlagen, die Vollsicken der Deckbleche radial zueinander zu versetzen und die Abstützmittel jeweils nur auf einer Seite der Distanzplatte oder der Deckbleche anzuordnen Die EP 0 465 268 A 1 offenbart eine solche Dichtung von der der Anmeldegegenstand ausgeht. Es hat sich gezeigt, daß der unsymmetrische Aufbau der Dichtung in Verbindung mit dem aus unterschiedlichen Materialien gefertigten Zylinderkopf- und Zylinderblock zu Gasundichtigkeiten führt, da die Funktionselemente wie Abstutzmittel und Vollsicken Beschadigungen an den abzudichtenden Bauteilen hervorrufen

Der Erfindung liegt die Aufgabe zugrunde, gattungsgemäße Flachdichtungen dahingehend zu verbessern, daß ihre Funktionselemente individuell auf die unterschiedlichen Werkstoffe der Motorenbauteile abgestimmt sind, so daß Bauteilbeschadigungen weitgehend vermieden werden. Diese Aufgabe wird erfindungsgemaß durch die kennzeichnenden Merkmale des Patentanspruch 1 gelost Vorteilhafte Ausgestaltungen der Erfindung sind in den Unteranspruchen dokumentiert

Durch die Veränderung der Sickengeometrie der einzelnen Deckbleche wird die Flachenpressung im Bereich des Abstutzmittels reduziert Durch die relativ breite Vollsicke ist sichergestellt, daß z B bei einem Zylinderkopf aus Leichtmetall keine Eingrabungen in den Zylinderkopf entstehen Durch die Anordnung der Sickenfüße der ersten und zweiten Vollsicke in der gleichen Ebene ist gleichzeitig sichergestellt, daß die an dieser Stelle eingeleitete Flachenpressung kein Kippmoment erzeugt

Je nach Anwendungsfall kann es von Vorteil sein, die kopfseitige Deckblechlage aus einem anderen Werkstoff und in einer anderen Blechstärke auszuführen, wobei durch Reduzierung der Vollsickenhohe eine Totaldeformation der Vollsicke erreichbar ist, ohne daß die Flachenpressung den maximal zulassigen Wert ubersteigt

Die Erfindung ist anhand von Ausfuhrungsbeispielen in der Zeichnung dargestellt und wird im folgenden naher erlautert. Es zeigen
- Fig 1: Draufsicht einer erfindungsgemäßen Flachdichtung
- Fig. 2: Ansicht gemäß Schnittlinie II - II der Fig. 1
- Fig 3: Ansicht einer alternativen Flachdichtung gemäß Fig. 2

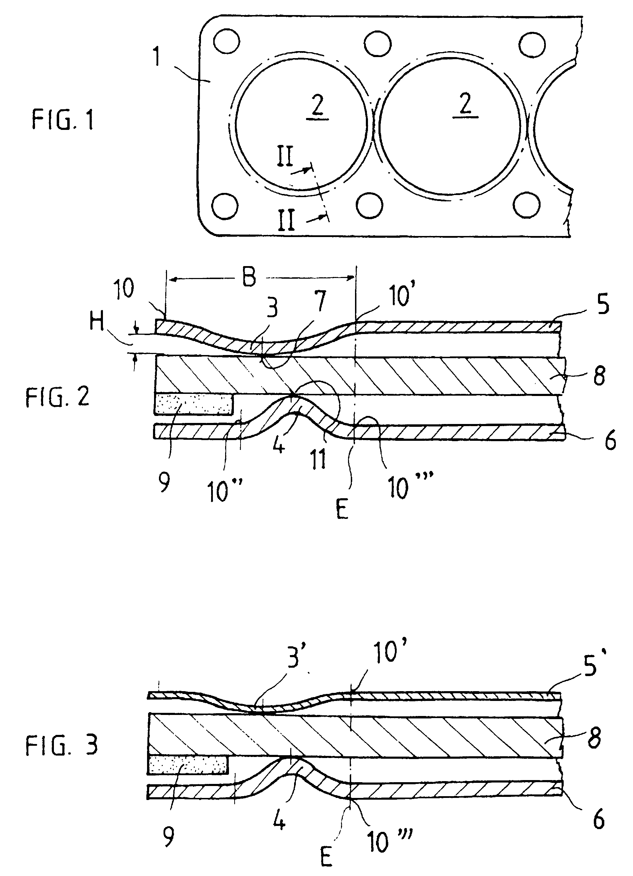

Die in der Fig. 1 dargestellte Flachdichtung (1) dient zur Abdichtung des Dichtspaltes zwischen dem Zylinderkopf und dem Zylinderblock einer Brennkraftmaschine. Die Flachdichtung (1) enthalt mehrere Brennraumoffnungen (2), die über Vollsicken (3, 4) in den Deckblechen (5, 5', 6) abgedichtet werden (Fig 2) Bei vielen Motoren sind die Materialien von Zylinderkopf und Zylinderblock unterschiedlich Die erfindungsgemaße Flachdichtung (1) tragt diesem Umstand Rechnung und ist deshalb im konstruktiven Aufbau unsymmetrisch aufgebaut Das Deckblech (5, 5') ist bei einem Motor mit einem Leichtmetall-Zylinderkopf und einem Grauguß-Motorblock zylinderkopfseitig angeordnet Die Sickenspitze (7) des Deckbleches korrespondiert mit einer Distanzplatte (8), welche zylinderblockseitig ein um den Brennraum (2) umlaufendes Abstützmittel (9) aufweist Während ein Sickenfuß (10) der Vollsicke (3) in der Ebene des Abstutzmittels (9) angeordnet ist. erstreckt sich die Sickenspitze (7) etwa am Randbereich des Abstützmittels (9) Die Vollsicke (4) des Deckbleches (6) ist so angeordnet, daß die Sickenspitze (11) radial versetzt zur Sickenspitze (7) verläuft Um eine optimale Anpassung der Vollsicke (3) an den Zylinderkopf (nicht dargestellt) zu erzeugen, ohne daß Beschädigungen zu erwarten sind, ist die Vollsicke (3) so ausgelegt, daß ihre Breite B aus der Summe der Breite der Vollsicke (4) und des Abstützmittels (9) sich ergibt, wobei die Sickenfüße (10', 10''') in der gleichen Ebene E angeordnet sind

In der Fig 3 ist ein besonders dünnes Deckblech (5') dargestellt Mit einer solchen Konstruktion laßt sich die Vollsicke (3') nahezu bis zur totalen Deformation verpressen, ohne daß die Pressungswerte am Zylinderkopf zu groß werden

Basis für die erfindungsgemäße Losung der Aufgabe ist die Erkenntnis, daß gerade der mehrlagige Aufbau der Flachdichtung die Möglichkeit bietet, Kopf- und Blockseite der Flachdichtung (1) jeweils auf die Gegebenheiten des korrespondierenden Zylinderblocks und Zylinderkopf anzupassen Die Losung ist ein vollig neuer Auslegungsansatz der Flachdichtung (1) im Vergleich zum Stand der Technik Vollsicken (3, 4) und Abstutzmittel (9) sind auf die Motorbauteile abgestimmt und vollkommen unsymmetrisch zueinander angeordnet

## Patentansprüche

1. Metallische Flachdichtung, insbesondere Zylinderkopfdichtung (1) von Brennkraftmaschinen, bestehend aus mindestens einem dem Zylinderkopf zugeordneten ersten Deckblech (5,5') mit einer ersten Vollsicke (3,3') und mindestens einem dem Zylinderblock zugeordneten zweiten Deckblech (6) mit einer zweiten Vollsicke (4), wobei die Vollsicken (3,3',4) eine Brennraumöffnung (2) umgeben und einer zwischen dem ersten und zweiten Deckblech (5,5',6) angeordneten Distanzplatte (8), welche auf der der ersten (3,3') oder der zweiten (4) Vollsicke zugeordneten Fläche Abstützmittel (9) aufweist, wobei die erste und zweite Vollsicke (3,3',4) radial versetzt zueinander angeordnet sind, derart, daß die dem Abstützmittel (9) gegenüberliegende Vollsicke (3,3') mit ihrer Sickenspitze (7) am Randbereich des Abstützmittels (9) und mit einem der Brennraumöffnung (2) benachbarten Sickenfuß (10) innerhalb der radialen Erstreckung des Abstützmittels (9) angeordnet ist, **dadurch gekennzeichnet, daß** die Breite (B) der dem Abstützmittel (9) gegenüberliegenden Vollsicke (3,3') der Summe aus der Breite der anderen Vollsicke (4) und des Abstützmittels (9) entspricht und daß der der Brennraumöffnung (2) abgewandte Sickenfuß (10', 10''') der ersten und zweiten Vollsicke (3, 3', 4) außerhalb der radialen Erstreckung des Abstützmittels (9) in der gleichen Ebene (E) angeordnet ist.

2. Metallische Flachdichtung nach Anspruch 1, **dadurch gekennzeichnet, daß** die Hohe (H) und Breite (B) der dem Abstutzmittel (9) gegenuberliegenden Vollsicke (3) nach der Formel 0,02 ⇐H/B⇐0,1 ausgebildet ist

3. Metallische Flachdichtung nach Anspruch 1 und 2, **dadurch gekennzeichnet, daß** das erste und zweite Deckblech (5, 5', 6) aus verschiedenen Werkstoffen gebildet ist

4. Metallische Flachdichtung nach den Ansprüchen 1 bis 3, dadurch gekennzeichent, daß die Vollsicken (3, 4) des ersten und zweiten Deckbleches (5,5',6) unterschiedliche Hohen aufweisen.

5. Metallische Flachdichtung nach den Ansprüchen 1 bis 4, **dadurch gekennzeichnet, daß** die Blechstarken des ersten und zweiten Deckbleches (3, 4) unterschiedlich ausgebildet sind

6. Metallische Flachdichtung nach den Anspruchen 1 bis 5, **dadurch gekennzeichnet, daß** die Blechstarke des ersten Deckbleches (5, 5') kleiner als die Blechstärke des zweiten Deckbleches (6) ausgebildet ist

## Claims

1. Metallic flat gasket, in particular a cylinder head gasket (1) of internal combustion engines, comprising at least one first cover sheet (5, 5 ), assigned to the cylinder head, with a first full bead (3, 3 ) and at least one second cover sheet (6), assigned to the cylinder block, with a second full bead (4), the full beads (3, 3 , 4) surrounding a combustion chamber opening, and a distance plate (8) disposed between the first and second cover sheet (5, 5, 6), which distance plate has support means (9) on the face assigned to the first (3, 3 ) or to the second (4) full bead, the first and second full bead (3, 3 , 4) being disposed radially offset relative to each other in such a manner that the full bead (3, 3 ) with its bead peak (7) situated opposite the support means (9) is disposed at the edge region of the support means (9) and with a bead foot (10) adjacent to the combustion chamber opening (2) within the radial extension of the support means (9), **characterised in that** the width (B) of the full bead (3, 3 ) situated opposite the support means (9) corresponds to the sum of the width of the other full bead (4) and of the support means (9) and **in that** the bead foot (10, 10 ) orientated away from the combustion chamber opening (2) of the first and second full bead (3, 3 , 4) is disposed outwith the radial extension of the support means (9) in the same plane (E).

2. Metallic flat gasket according to claim 1, **characterised in that** the height (H) and width (B) of the full bead (3) situated opposite the support means (9) is formed according to the formula 0.02 < = H/B < = 0.1.

3. Metallic flat gasket according to claim 1 and 2, **characterised in that** the first and second cover sheet (5, 5 , 6) is formed from different materials.

4. Metallic flat gasket according to claims 1 to 3, **characterised in that** the full beads (3, 4) of the first and second cover sheet (5, 5 , 6) have different heights.

5. Metallic flat gasket according to claims 1 to 4, **characterised in that** the sheet metal thicknesses of the first and second cover sheet (3, 4) are formed so as to be different.

6. Metallic flat gasket according to claims 1 to 5, **characterised in that** the sheet metal thickness of the first cover sheet (5, 5 ) is configured to be smaller than the sheet metal thickness of the second cover sheet (6).

## Revendications

1. Garniture plate métallique, en particulier un joint de culasse (1) pour moteurs à combustion interne, comprenant au moins une première tôle de protection (5, 5') associée à la culasse avec un premier jonc complet (3, 3') et au moins une deuxième tôle de protection (6) associée au bloc-cylindres avec un deuxième jonc complet (4), les joncs complets (3, 3', 4) entourant un orifice de chambre d'explosion (2), et une plaque d'espacement (8) disposée entre les première et deuxième tôles de protection (5, 5', 6), la plaque présentant des moyens d'appui (9) sur la surface associée aux premier (3, 3') et deuxième (4) joncs complets, les premier et deuxième joncs complets (3, 3', 4) étant disposés de façon décalés l'un par rapport à l'autre de telle sorte que le jonc complet (3, 3') opposé aux moyens d'appui est disposé avec sa pointe de jonc (7) au bord des moyens d'appui (9) et avec une base de jonc (10) adjacente à l'orifice de chambre d'explosion (2) à l'intérieur de l'étendue radiale des moyens d'appui (9), **caractérisée en ce que** la largeur (B) du jonc complet (3, 3') opposé aux moyens d'appui (9) correspond à la somme composée de la largeur de l'autre jonc complet (4) et des moyens d'appui (9) et **en ce que** la base de jonc (10', 10''') détournée de l'orifice de chambre d'explosion (2) des premier et deuxième joncs complets (3, 3', 4) est disposée à l'extérieur de l'étendue radiale des moyens d'appui (9) dans le même plan (E).

2. Garniture plate métallique selon la revendication 1, **caractérisée en ce que** la hauteur (H) et la largeur (B) du jonc complet (3) opposé aux moyens d'appui (9) sont réalisées selon la formule 0,02 <= H/B <= 0,1.

3. Garniture plate métallique selon la revendication 1 et 2, **caractérisée en ce que** les première et deuxième tôles de protection (5, 5', 6) sont réalisées dans différents matériaux.

4. Garniture plate métallique selon les revendications 1 à 3, **caractérisée en ce que** les joncs complets (3, 4) des première et deuxième tôles de protection (5, 5', 6) présentent des hauteurs différentes.

5. Garniture plate métallique selon les revendications 1 à 4, **caractérisée en ce que** les épaisseurs de tôle des première et deuxième tôles de protection (3, 4) sont réalisées différemment.

6. Garniture plate métallique selon les revendications 1 à 5, **caractérisée en ce que** l'épaisseur de tôle de la première tôle de protection (5, 5') est inférieure à l'épaisseur de tôle de la deuxième tôle de protection (6).
